(19) Europäisches Patentamt
European Patent Office
Office européen des brevets

(11) **EP 1 761 750 B1**

(12) **FASCICULE DE BREVET EUROPEEN**

(45) Date de publication et mention
de la délivrance du brevet:
**08.10.2008 Bulletin 2008/41**

(21) Numéro de dépôt: **05783739.5**

(22) Date de dépôt: **24.06.2005**

(51) Int Cl.:
***G01L 1/10*** *(2006.01)*    ***G01N 3/34*** *(2006.01)*

(86) Numéro de dépôt international:
**PCT/FR2005/001597**

(87) Numéro de publication internationale:
**WO 2006/010830 (02.02.2006 Gazette 2006/05)**

(54) **PROCEDE ET DISPOSITIF DE DETERMINATION DE L'EFFORT DE TRACTION AUQUEL EST SOUMIS UN ELEMENT SCELLE**

VERFAHREN UND VORRICHTUNG ZUR MESSUNG VON AUF EIN VERSIEGELTES ELEMENT AUSGEÜBTER ZUGSPANNNUNG

METHOD AND DEVICE FOR DETERMINING THE TENSILE STRESS EXERTED ON A SEALED ELEMENT

(84) Etats contractants désignés:
**AT BE BG CH CY CZ DE DK EE ES FI FR GB GR HU IE IS IT LI LT LU MC NL PL PT RO SE SI SK TR**

(30) Priorité: **25.06.2004  FR 0406969**

(43) Date de publication de la demande:
**14.03.2007  Bulletin 2007/11**

(73) Titulaire: **Rincent BTP Services**
**91026 Evry Cedex (FR)**

(72) Inventeur: **RINCENT, Jean-Jacques**
**c/o RINCENT BTP Services**
**F-91026 EVRY Cedex (FR)**

(74) Mandataire: **Intes, Didier Gérard André et al**
**Cabinet Beau de Loménie**
**158, rue de l'Université**
**75340 Paris Cedex 07 (FR)**

(56) Documents cités:
**EP-A- 0 438 347          WO-A-96/01927**
**WO-A-99/53282           GB-A- 1 446 661**
**US-A- 4 979 125**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé et un dispositif de détermination de l'effort de traction auquel est soumis un élément scellé maintenant une structure contre un support, l'élément scellé étant contraint en traction.

Les éléments scellés permettent de reprendre des efforts de traction dans le domaine du bâtiment, des travaux publics et de l'industrie. Ces éléments scellés sont en particulier des tirants actifs (précontraints) ou passifs qui participent à la stabilité des ouvrages du type murs de soutènement ou de quais en site portuaire, des boulons utilisés pour assurer la stabilité des voûtes des tunnels, des clous mis en oeuvre dans les renforcements de sols dans les talus ou des chevilles précontraintes fixant des éléments contre un support.

Il est connu de déterminer les efforts dans les éléments scellés en réalisant des essais destructifs, en particulier des essais de mise en traction directe.

Cependant ces essais de mise en traction directe impliquent un aménagement et une préparation de l'élément à tester en ré-usinant in situ la partie accessible, puis en fixant le dispositif d'essais par une connexion pouvant être par exemple un filetage. Il est ensuite nécessaire de mettre l'élément en tension pour déterminer l'effort dans ce dernier. Or, cette mise en tension peut être dangereuse, notamment lorsque l'effort atteint celui de la rupture. En effet les éléments scellés étant généralement constitués de métal, ils se corrodent et se fragilisent au cours du temps, en particulier lorsqu'ils se trouvent en milieu agressif, de sorte que les essais peuvent conduire à la rupture et mettre ainsi les opérateurs d'essais en danger ; en outre, la rupture de l'élément scellé peut entraîner des désordres sur l'ouvrage testé.

Des procédés et dispositifs selon l'état de la technique sont décrit dans les documents US 4 979 125, EP 0 438 347, WO 99/53282 et GB 1 446 661.

Le but de l'invention est de fournir un procédé et un dispositif qui permettent de déterminer l'effort de traction auquel est soumis l'élément scellé à partir d'essais non destructifs. Les avantages que procure la détermination de l'effort à partir d'essais non destructifs sont l'intérêt économique de ce type de procédé, la réalisation de ces essais non destructifs sur des sites où des essais destructifs sont difficilement réalisables, entre autre sous l'eau, et le fait que ce type d'essais est sans danger.

Le but est atteint par le fait que le procédé de détermination de l'effort de traction auquel est soumis un élément scellé comporte les étapes suivantes :

a) on fournit une loi de variation entre la raideur dynamique de l'élément scellé et un effort statique de traction auquel ce dernier est soumis,

b) on soumet l'élément scellé à un impact de force déterminée, pour générer une vibration de l'élément scellé et de la structure,

c) on relève la réponse vibratoire de l'élément scellé et de la structure mis en vibration,

d) on détermine la raideur dynamique de l'élément scellé et de la structure à partir de la réponse vibratoire,

e) on corrige la raideur dynamique de l'élément scellé et de la structure d'un paramètre traduisant l'influence de la structure sur cette dernière raideur, et

f) on applique la loi de variation à cette raideur dynamique corrigée pour obtenir l'effort dans l'élément scellé.

Ainsi, le procédé permet de retrouver l'effort de traction auquel est soumis un élément scellé, à partir d'essais non destructifs. En l'espèce, l'effort de traction est déterminé à partir d'une loi de correspondance entre effort statique et raideur dynamique et à partir d'un essai dynamique (ou plus précisément à partir de l'analyse de la réponse vibratoire de l'élément mis en vibration suite à un impact de force déterminée). L'impact de force est déterminé, par exemple en mesurant l'amplitude de cette force au moment de l'impact.

Avantageusement, cet impact peut être réalisé sur la tête de l'élément scellé ou, en particulier lorsque l'élément scellé comporte une plaque d'appui.

Avantageusement, après avoir effectué un traitement mathématique de la réponse vibratoire de l'élément scellé et de la structure mis en vibration, on construit une courbe qui correspond au rapport de la vitesse de propagation sur la force appliquée en fonction de la fréquence et on détermine la raideur dynamique de l'élément scellé et de la structure en mesurant sur cette courbe l'inverse de la pente à l'origine multiplié par $2\pi$.

L'invention concerne aussi un dispositif de détermination de l'effort de traction auquel est soumis un élément scellé qui comporte :

- une mémoire contenant une loi de variation entre la raideur dynamique de l'élément scellé et un effort statique de traction auquel ce dernier est soumis,
- des moyens pour soumettre l'élément scellé à un impact de force déterminée pour générer une vibration de l'élément scellé et de la structure,
- des moyens pour relever la réponse vibratoire de l'élément scellé et de la structure mis en vibration,
- des moyens pour déterminer la raideur dynamique de l'élément scellé et de la structure à partir de la réponse vibratoire,

- des moyens pour déterminer la raideur dynamique de l'élément scellé permettant de corriger la raideur dynamique de l'élément scellé et de la structure d'un paramètre traduisant l'influence de la structure sur cette dernière raideur, et
- des moyens pour appliquer la loi de variation à cette raideur dynamiques corrigée pour obtenir l'effort dans l'élément scellé.

Avantageusement, les moyens pour soumettre l'élément scellé à un impact de force déterminée comportent un marteau d'impact équipé d'un capteur de force et les moyens pour relever la réponse vibratoire comportent un capteur de vitesse, du type géophone ou vélocimètre, ou un accéléromètre.

Avantageusement, les moyens pour relever la réponse vibratoire sont positionnés sur l'élément scellé ou éventuellement sur la plaque d'appui de l'élément scellé, selon les conditions du site.

Avantageusement, le dispositif comporte des moyens de traitement mathématiques destinés à traiter la réponse vibratoire de l'élément scellé et de la structure.

Avantageusement, les moyens de traitement mathématiques comportent des transformées de Fourier, qui permettent de traiter la réponse vibratoire pour obtenir une courbe représentant la vitesse sur la force, en fonction de la fréquence.

L'invention sera bien comprise et ses avantages apparaîtront mieux à la lecture de la description détaillée qui suit, de modes de réalisation de l'invention représentés à titre d'exemples non limitatifs.

La description se réfère aux dessins annexés sur lesquels :

- la figure 1A représente schématiquement la tête d'un élément scellé maintenant une structure,
- la figure 1B représente en coupe l'élément scellé de la figure 1A,
- la figure 2 représente la tête d'un autre élément scellé,
- la figure 3 représente schématiquement un essai dynamique,
- la figure 4 représente une courbe illustrant la réponse vibratoire d'un élément mis en vibration,
- la figure 5 représente la loi de variation entre raideur dynamique et effort statique,
- la figure 6 représente la détermination de l'effort selon un premier mode de réalisation, et
- la figure 7 représente la détermination de l'effort selon un autre mode de réalisation.

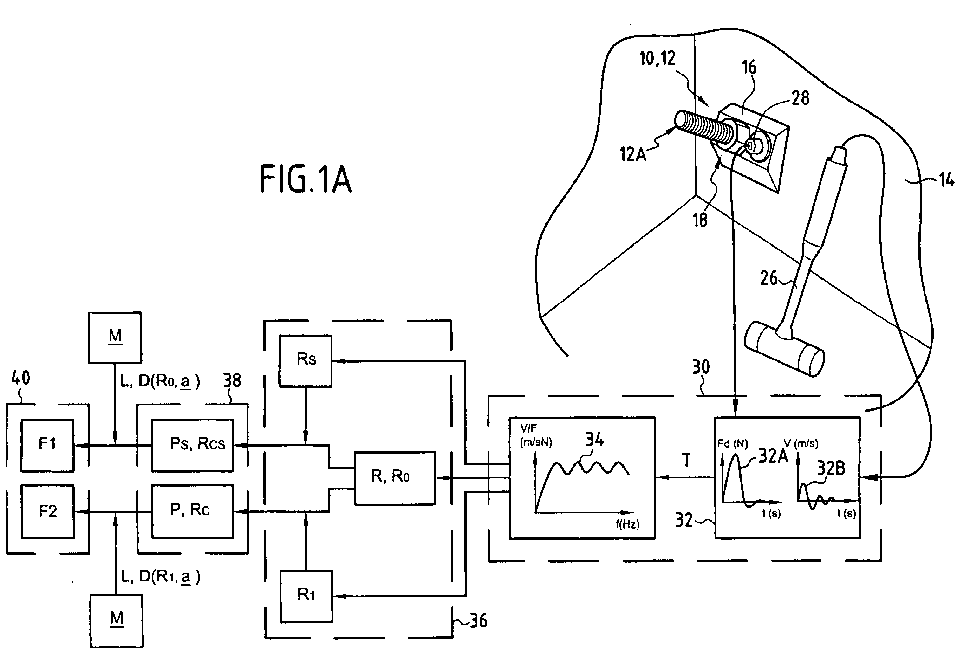

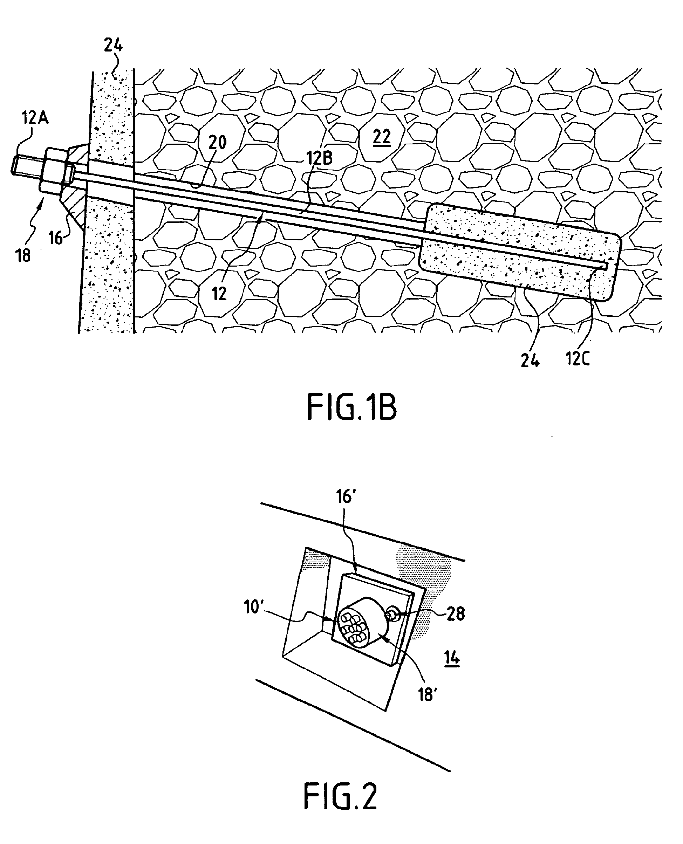

La figure 1A illustre un élément scellé 10, en l'espèce un tirant précontraint 12 qui participe à la stabilité d'une structure composée d'une pluralité d'éléments de structure, en plaquant un élément de structure 14 contre un support. Pour toute la suite, l'élément de structure est désigné par structure. Le tirant 12 illustré sur la figure 1A, comporte une plaque d'appui 16 et une tête d'ancrage 18. En fait, l'élément dont on cherche à déterminer l'effort en traction pourrait être un tirant à torons 10', comme illustré sur la figure 2 comportant une plaque d'appui 16' et une tête d'ancrage 18', ou tout autre type d'éléments scellés connus, comme en particulier des boulons, des clous, des chevilles précontraintes, etc.

Le tirant 12, dont on aperçoit l'extrémité libre 12A sur la figure 1A est mis en place dans l'ouvrage de la manière suivante.

En référence à la figure 1B, après avoir effectué un forage 20 dans un support 22 qu'il convient de stabiliser, on introduit l'armature 12B du tirant 12 jusqu'à ce que l'extrémité 12C opposée à l'extrémité libre 12A se trouve dans un coulis de scellement 24. La plaque d'appui 16, qui est éventuellement disposée entre la tête d'ancrage 18 et l'élément de structure 24 destiné à stabiliser le support 22, et le serrage de la tête d'ancrage 18, permettent de précontraindre le tirant 12 sous une force connue.

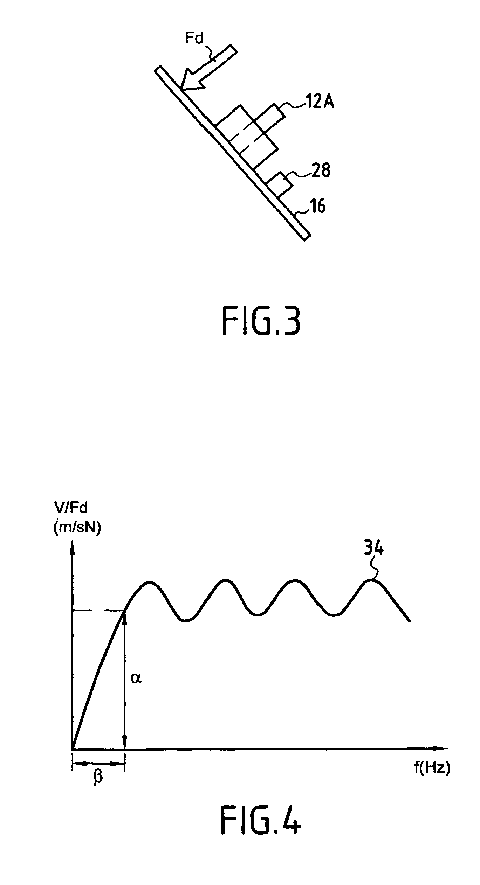

Le dispositif selon l'invention comporte des moyens pour soumettre l'élément scellé à un impact de force Fd comme illustré sur la figure 3, l'impact pouvant être réalisé soit sur la plaque d'appui 16, soit directement sur la tête de l'élément scellé correspondant à l'extrémité libre 12A du tirant 12. En l'espèce, ces moyens soumettant l'élément scellé à un impact, comportent un marteau d'impact 26 équipé d'un capteur de force permettant de mesurer la force Fd appliquée, comme illustré sur la figure 1A. Le dispositif comporte en outre des moyens pour relever la réponse vibratoire de l'élément scellé 10 et de la structure 14, tous deux mis en vibration, qui comprennent un capteur de vitesse 28 du type géophone ou vélocimètre, ou un accéléromètre. Le dispositif comporte par ailleurs, des moyens d'acquisition et de traitement 30 permettant de réaliser des transformées de Fourier T de la réponse vibratoire 32 de l'élément scellé 10 et de la structure 14 et ainsi traiter cette réponse afin de pouvoir l'analyser.

Nous allons tout d'abord exposer la manière dont un essai dynamique est conduit et l'analyse qui en est faite.

Etape b)

On soumet la tête 12A du tirant 12 ou la plaque d'appui 16 à un impact de force Fd à l'aide du marteau d'impact 26, pour générer une vibration de l'élément scellé 10 et de la structure 14.

Etape c)

Après avoir réalisé cet essai dynamique, on enregistre la réponse vibratoire 32 (figure 1A) correspondant à la réponse vibratoire de l'élément scellé 10 et de la structure 14 mis en vibration à l'aide d'un capteur de vitesse 28 et des moyens d'acquisition et de traitement 30.

La réponse vibratoire 32 correspond en fait à une courbe 32A qui représente le signal de force d'impact Fd en Newton (N), en fonction du temps t en secondes (s), et d'une courbe 32B qui représente le signal de vitesse V de propagation de la vibration générée, en mètre/seconde (m/s), en fonction du temps t en secondes (s).

étape d)

Ces deux courbes de réponse 32A et 32B sont ensuite traitées, à l'aide d'un traitement mathématique connu implanté dans les moyens d'acquisition et de traitement 30, comportant en particulier un traitement par une transformée de Fourier et les moyens d'acquisition et de traitement 30 permettent alors de tracer une courbe traitée 34, représentant la vitesse V de propagation rapportée sur la force Fd appliquée, V/Fd (en m/sN), en fonction de la fréquence f en Hertz (Hz), comme illustré sur la figure 4.

La raideur dynamique R de l'élément scellé 10 et de la structure 14, est déterminée à partir de la courbe traitée 34 en déterminant l'inverse de la pente à l'origine (multiplié par $2\Pi$). Le dispositif comporte à cet effet des moyens 36 pour déterminer cette raideur dynamique R à partir de la courbe traitée 34. Ainsi, l'allure de la courbe 34 au voisinage de l'origine est proche d'un segment rectiligne, qui s'étend entre l'origine et un point de coordonnées ayant pour abscisse et ordonnée, respectivement ($\beta$, $\alpha$).

Dans ce cas,

$$R = \frac{\beta}{\alpha} \times 2\pi.$$

Etape a)

Pour pouvoir déterminer l'effort de traction auquel est soumis l'élément scellé 10, il convient alors de fournir une loi de variation L entre la raideur dynamique R de l'élément testé et un effort statique de traction F auquel il est soumis. Cette étape est une étape préliminaire réalisée à partir d'essais effectués avant les mesures selon l'invention.

On a constaté que la correspondance entre la raideur dynamique et l'effort statique peut être approchée par une loi L de proportionnalité entre la racine carrée de la raideur dynamique et l'amplitude de l'effort. Cette loi L est :

$$\left(Rd\right)^{\frac{1}{2}} = \underline{a} \times F + \left(Ri\right)^{\frac{1}{2}}$$

où Rd représente la raideur dynamique de l'élément testé,
Ri représente la raideur de l'élément testé,
F représente l'effort dans l'élément testé, et
$\underline{a}$ dépend de l'élément testé.

Notons que lorsque l'élément testé, pour déterminer cette loi L, est un élément scellé seul, Ri représente la raideur dynamique de l'élément scellé sous effort nul.

Ainsi, cette loi L a été déterminée en testant un certain nombre d'éléments scellés 10 seuls analogues à ceux qui font l'objet des mesures selon l'invention, mais ne soutenant pas d'élément de structure contre un support, à l'aide d'essais statiques de traction et d'essais dynamiques.

Une base de données a été créée en effectuant successivement des essais dynamiques sur un élément scellé 10 seul. En l'espèce, pour chaque essai dynamique, l'élément scellé 10 est soumis à une force d'impact Fd, tout en étant maintenu sous contrainte sous une force de traction donnée F, dont la valeur est distincte pour les différents essais.

Pour chaque force de traction F appliquée, l'essai dynamique permet de déterminer, comme indiqué dans les étapes b) à d), la raideur dynamique R de l'élément scellé 10 correspondant, de manière à obtenir une base de données de couples de points effort statique/raideur dynamique (F, R).

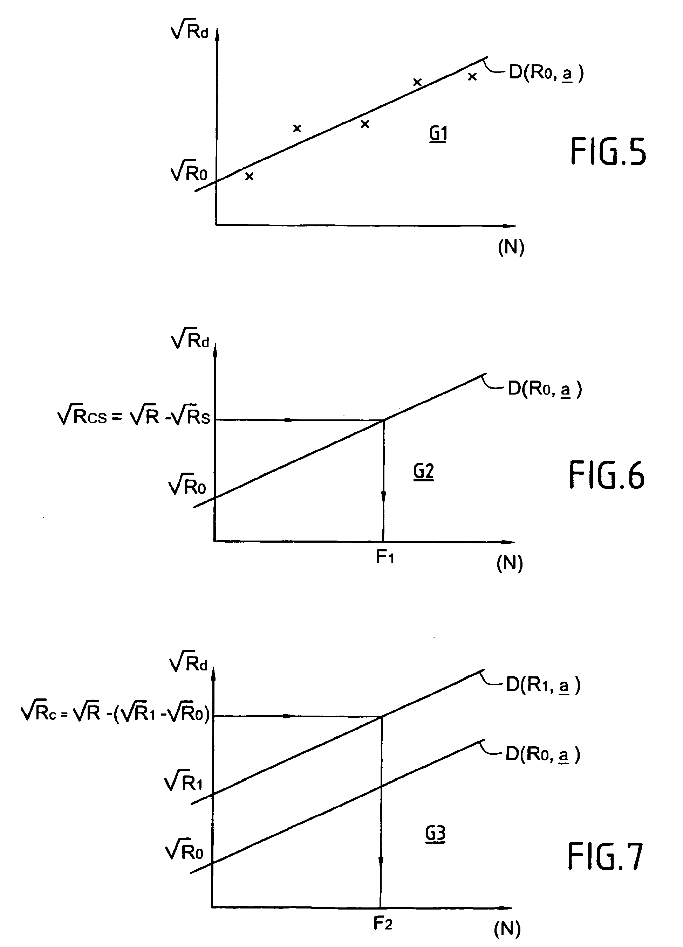

Après analyse de cette base de données, il a été observé qu'en reportant sur un graphe G1, comme représenté sur la figure 5, les valeurs de la racine carrée des raideurs dynamiques déterminées, en fonction des efforts statiques appliqués F en Newton (N), on obtient la loi L de proportionnalité telle que précitée.

La valeur à l'origine de cette loi, représente la raideur dynamique intrinsèque R0 de l'élément scellé 10 seul (sous effort de traction nul). La valeur de cette raideur peut être obtenue en effectuant comme exposé précédemment un essai dynamique conduit selon les étapes b) à d) précitées. La raideur dynamique intrinsèque R0 de l'élément scellé 10 est déterminée sous effort nul, c'est-à-dire avant que l'élément scellé soit contraint en traction.

La valeur de la raideur dynamique intrinsèque R0 de l'élément scellé 10 est alors reportée sur le graphe G1, sur l'axe des ordonnées, puisqu'elle représente la raideur dynamique sous effort nul, c'est-à-dire la valeur à l'origine.

La pente a de la droite est déterminée en traçant une droite D (R0, a) ayant pour origine R0 et passant au plus proche des points relevés lors des efforts statiques de traction cumulés aux essais dynamiques sur les éléments scellés seuls 10.

Lorsqu'il n'est pas possible de déterminer la valeur de la raideur dynamique intrinsèque R0 de l'élément scellé 10 seul à l'aide d'essais, il convient de tracer la droite qui passe au plus près des couples de points du graphe G1. Après avoir tracé une telle droite comme illustré sur la figure 5, il suffit de relever sa pente et sa valeur à l'origine, puisque cette dernière correspond à la raideur dynamique intrinsèque R0 de l'élément scellé 10 seul pour définir l'équation de la droite D (R0, a).

Cette loi L ainsi complètement définie est implantée dans une mémoire M du dispositif.

Etape e)

Cependant, la raideur dynamique R de l'élément scellé 10 et de la structure 14 ne peut être directement reportée sur la droite D (R0, a) illustrant cette loi L de variation entre la raideur dynamique et l'effort statique, car cette dernière provient d'essais effectués uniquement sur des éléments scellés seuls et les essais dynamiques sont effectués in situ, sur l'élément scellé 10 et la structure 14. Il convient donc de corriger cette raideur dynamique R pour pouvoir déterminer l'effort de traction auquel est soumis l'élément scellé 10 seul pour maintenir la structure 14 contre le support 22.

A ce stade, deux modes opératoires peuvent être effectués selon la nature des paramètres connus.

En effet, le paramètre traduisant l'influence de la structure 14 sur la raideur dynamique R de l'élément scellé 10 peut être déterminé de deux manières : à partir d'essais effectués sur la structure 14 seule ou bien à partir d'essais effectués sur l'élément scellé et la structure 14. La détermination de l'effort de traction auquel est soumis l'élément scellé 10 différera alors selon le paramètre déterminé, comme on le verra de manière plus détaillée ci-après.

Selon un premier mode opératoire, on détermine préalablement une raideur dynamique intrinsèque Rs de la structure 14 seule.

Cette raideur dynamique intrinsèque Rs de la structure 14 peut être déterminée à partir de banques de données connues pour des éléments du type de l'élément de structure 14 et de la connaissance de l'épaisseur de l'élément de structure 14 utilisé in situ.

Lorsque la raideur dynamique intrinsèque Rs de la structure 14 n'est pas connue, mais que les éléments scellés ne sont pas encore mis en place sur le site, on peut effectuer des essais dynamiques sur des structures 14 (sans élément scellé) en effectuant les étapes b) à d) précitées sur ces éléments de structure 14 seuls et ainsi déterminer la raideur dynamique Rs en relevant l'inverse de la pente à l'origine (à $2\pi$ près), comme exposé dans l'étape d), cette raideur Rs étant ensuite gardée en mémoire pour, le moment venu, être utilisée pour corriger des mesures selon l'invention.

Un essai dynamique est par ailleurs réalisé sur un élément scellé 10 mis en place contre une structure 14 et contraint en traction, pour déterminer la raideur dynamique R de l'élément scellé 10 et de la structure 14, en appliquant les étapes b) à d).

Dans ce mode opératoire, la raideur dynamique Rs de la structure 14 étant connue, elle représente directement le paramètre de correction Ps. Ainsi, il suffit de corriger, à l'aide de moyens 38 pour déterminer la raideur dynamique corrigée Rcs, la racine carrée de la raideur dynamique R de l'élément scellé 10 et de la structure 14 en faisant la différence avec la racine carrée de cette première raideur dynamique Rs et de reporter la raideur dynamique corrigée Rcs correspondante sur un graphe G2 représenté sur la figure 6. On reporte aussi sur ce graphe G2, la loi de variation L correspondant à la droite D (R0, a).

En fait,

$$\begin{cases} Rcs^{\frac{1}{2}} = R^{\frac{1}{2}} - Ps^{\frac{1}{2}} \\ Ps = Rs \end{cases}.$$

L'effort dans l'élément scellé 10 est obtenu en appliquant la loi de variation à cette raideur dynamique corrigée Rcs. En l'espèce, il convient de lire sur la droite D (R0, a) du graphe G2 de la figure 6, l'effort F1 correspondant à la valeur de la raideur dynamique corrigée Rcs qui est reportée en ordonnée. Le dispositif comporte à cet effet des moyens 40 pour appliquer la loi de variation L et déterminer l'effort F1.

Selon un autre mode opératoire, lorsqu'il n'est pas possible de connaître la raideur dynamique intrinsèque Rs de la structure 14 seule, en particulier lorsque la détermination de l'effort de traction se fait sur des sites sur lesquels les éléments scellés 10 sont déjà mis en place, on détermine préalablement une raideur dynamique R1 de l'élément scellé 10 mis en place contre la structure 14 et non contraint, pour déduire ensuite l'influence de la structure.

Pour ce faire on effectue les étapes b) à d) précitées, en réalisant des essais dynamiques sur un élément scellé 10 mis en place contre une structure 14 et non encore contraint en traction.

On reporte cette valeur de raideur dynamique R1 de l'élément scellé 10 avec la structure 14 sur un graphe G3 représenté sur la figure 7 et on construit la droite D (R1, a) en appliquant la loi L ayant pour origine cette valeur de la raideur dynamique R1 pour l'élément scellé 10 et la structure 14. Cette valeur de raideur dynamique R1 pour l'élément scellé 10 et la structure 14 représente la raideur dynamique de l'élément scellé et l'influence qu'a la structure sur ce dernier.

De manière analogue à celle décrite pour le premier mode opératoire, un essai dynamique est par ailleurs réalisé sur un élément scellé 10 mis en place contre une structure 14 et contraint en traction, pour déterminer la raideur dynamique R de l'élément scellé 10 et de la structure 14, en appliquant les étapes b) à d).

Cependant dans ce mode opératoire, la raideur dynamique Rs de la structure seule 14 n'étant pas connue, il faut déterminer un autre paramètre de correction P traduisant l'influence de la structure sur la raideur dynamique R de l'élément scellé 10 et de la structure 14.

Ainsi, à l'aide des moyens 38 pour déterminer la raideur dynamique corrigée Rc, en faisant la différence entre les racines carrées de la raideur dynamique R1 de l'élément scellé 10 avec la structure 14 et de la raideur dynamique intrinsèque R0 de l'élément scellé sans la structure, on obtient un paramètre de correction P.

En fait,

$$\begin{cases} Rc^{\frac{1}{2}} = R^{\frac{1}{2}} - P \\ P = R1^{\frac{1}{2}} - R0^{\frac{1}{2}} \end{cases}.$$

Cependant, ce paramètre de correction P ne représente pas directement la raideur dynamique de la structure seule 14, puisqu'il découle de mesures faites sur l'élément scellé 10 et la structure 14, l'un interagissant avec l'autre.

En conséquence, il convient de reporter la raideur dynamique corrigée Rc non pas sur la droite D (R0, a) correspondant à l'application de la loi L pour l'élément scellé seul (non encore contraint), mais sur la droite D (R1, a) correspondant à l'application de la loi L pour l'élément scellé 10 (non encore contraint) maintenant la structure 14.

L'effort dans l'élément scellé 10 est obtenu en appliquant la loi de variation à cette raideur dynamique corrigée Rc, à l'aide des moyens 40 pour appliquer la loi de variation L et déterminer l'effort F2. En l'espèce, il convient de lire sur la droite D (R1, a) du graphe G3 de la figure 7, l'effort F2 correspondant à la valeur de la raideur dynamique corrigée Rc qui est reportée en ordonnée.

Il est à noter que quelque soit le mode opératoire retenu, les valeurs des efforts de traction F1 et F2 obtenus restent proches l'un de l'autre. En conséquence, F1 ou F2 représente bien l'effort de traction auquel est soumis l'élément scellé 10.

**Revendications**

**1.** Procédé de détermination de l'effort de traction (F1, F2) auquel est soumis un élément scellé (10) maintenant une structure (14) contre un support (22), l'élément scellé (10) étant contraint en traction, comprenant les étapes suivantes:

a) on fournit une loi de variation (L) entre la raideur dynamique de l'élément scellé (10) et un effort statique de traction (F) auquel ce dernier (10) est soumis, F)
b) on soumet l'élément scellé (10) à un impact de force déterminée (Fd), pour générer une vibration de l'élément scellé (10) et de la structure (14),
c) on relève la réponse vibratoire (32, 32A, 32B, 34) de l'élément scellé (10) et de la structure (14) mis en vibration,
d) on détermine la raideur dynamique (R) de l'élément scellé (10) et de la structure (14) à partir de la réponse vibratoire (32, 32A, 32B, 34),
e) on corrige la raideur dynamique (R) de l'élément scellé (10) et de la structure (14) d'un paramètre (P, Ps) traduisant l'influence de la structure (14) sur cette dernière raideur dynamique (R), et

f) on applique la loi de variation (L) à cette raideur dynamique corrigée (Rc, Rcs) pour obtenir l'effort (F1, F2) dans l'élément scellé (10).

2. Procédé selon la revendication 1, **caractérisé en ce que** l'impact (Fd) est réalisé sur la tête (12A) de l'élément scellé (10).

3. Procédé selon la revendication 1, **caractérisé en ce que** l'impact (Fd) est réalisé sur une plaque d'appui (16) de l'élément scellé (10).

4. Procédé selon l'une quelconque des revendications précédentes, **caractérisé en ce que** la loi (L) définit une droite d'équation :

$$(Rd)^{\frac{1}{2}} = \underline{a} \times F + (Ri)^{\frac{1}{2}}$$

où Rd représente la raideur dynamique de l'élément testé,
Ri représente la raideur de l'élément testé,
F représente l'effort dans l'élément testé, et
$\underline{a}$ dépend de l'élément testé.

5. Procédé selon l'une quelconque des revendications 1 à 4, **caractérisé en ce que** :

- on fournit une raideur dynamique intrinsèque de la structure (Rs) qui correspond au paramètre (Ps) traduisant l'influence de la structure (14) sur la raideur dynamique (R) de l'élément scellé (10) et de la structure (14),
- on fournit une raideur dynamique intrinsèque (R0) de l'élément scellé (10), et
- on applique sur une courbe (D (R0, $\underline{a}$)) représentant la raideur dynamique de l'élément scellé (10), la raideur dynamique corrigée (Rcs) par ledit paramètre (Ps), pour obtenir l'effort dans l'élément scellé (10).

6. Procédé selon l'une quelconque des revendications 1 à 4, **caractérisé en ce que** :

- on fournit une raideur dynamique (R1) de l'élément scellé (10) avec la structure (14),
- on fournit une raideur dynamique intrinsèque (R0) de l'élément scellé (10),
- on construit une courbe (D (R1, $\underline{a}$)) représentant la raideur dynamique de l'élément scellé (10) et de la structure (14) à partir de l'application de la loi de variation (L) à la raideur dynamique (R1) de l'élément scellé (10) avec la structure (14),
- on détermine le paramètre (P) traduisant l'influence de la structure (14) sur la raideur dynamique (R) de l'élément scellé (10) et de la structure (14), en faisant la différence entre la raideur dynamique (R1) de l'élément scellé (10) avec la structure (14) et une raideur dynamique intrinsèque (R0) de l'élément scellé (10) sans la structure (14), et
- on applique sur la courbe (D (R1, $\underline{a}$)) représentant la raideur dynamique (R1) de l'élément scellé (10) et de la structure (14), la raideur dynamique corrigée (Rc) par ledit paramètre (P), pour obtenir l'effort dans l'élément scellé (10).

7. Procédé selon la revendication 5 ou 6, **caractérisé en ce qu'**on évalue la raideur dynamique intrinsèque (R0) de l'élément scellé (10) seul en effectuant les étapes b) à d) sur un élément scellé (10) seul et non encore contraint en traction.

8. Procédé selon la revendication 5, **caractérisé en ce qu'**on évalue la raideur dynamique intrinsèque (Rs) de la structure (14) en effectuant les étapes b) à d) sur une structure sans élément scellé (10).

9. Procédé selon la revendication 6, **caractérisé en ce qu'**on évalue la raideur dynamique (R1) de l'élément scellé (10) avec la structure (14) en effectuant les étapes b) à d) sur un élément scellé (10) non contraint.

10. Dispositif de détermination de l'effort de traction ($F_1$, $F_2$) auquel est soumis un élément scellé (10) d'une structure (14) contre un support (22), l'élément scellé (10) étant scellé et contraint en traction par rapport au support (22), comportant:

- une mémoire (<u>M</u>) contenant une loi de variation (L) entre la raideur dynamique de l'élément scellé (10) et un effort statique (F) de traction auquel ce dernier (10) est soumis,
- des moyens (26) pour soumettre l'élément scellé (10) à un impact de force déterminée (Fd) pour générer une vibration de l'élément scellé (10) et de la structure,
- des moyens (28) pour relever la réponse vibratoire (32, 32A, 32B, 34) de l'élément scellé (10) et de la structure (14) mis en vibration,
- des moyens (36) pour déterminer la raideur dynamique (R) de l'élément scellé (10) et de la structure (14) à partir de la réponse vibratoire (32, 32A, 32B, 34),
- des moyens (38) pour déterminer la raideur dynamique (Rc, Rcs) de l'élément scellé (10) permettant de corriger la raideur dynamique (R) de l'élément scellé (10) et de la structure (14) d'un paramètre (P, Ps) traduisant l'influence de la structure (14) sur cette dernière raideur dynamique (R), et
- des moyens (40) pour appliquer la loi de variation (L) à cette raideur dynamique corrigée (Rc, Rcs) pour obtenir l'effort ($F_1$, $F_2$) dans l'élément scellé (10).

**11.** Dispositif selon la revendication précédente, **caractérisé en ce qu'**il comporte des moyens de traitement mathématiques (T) destinés à traiter la réponse vibratoire de l'élément scellé (10) et de la structure (14).

**Claims**

**1.** Method for determining the tensile stress ($F_1$, $F_2$) exerted on a sealed element (10) holding a structure (14) against a support (22), the sealed element (10) being subject to tensile stress, comprising the following steps:

a) providing a variation law (L) between the dynamic stiffness of the sealed element (10) and a static tensile stress (F) exerted on the latter (10),
b) subjecting the sealed element (10) to an impact of a given force (Fd), in order to generate vibration in the sealed element (10) and the structure (14),
c) recording the vibratory response (32, 32A, 32B, 34) of the sealed element (10) and the structure (14) set in vibration,
d) determining the dynamic stiffness (R) of the sealed element (10) and the structure (14) from the vibratory response (32, 32A, 32B, 34),
e) correcting the dynamic stiffness (R) of the sealed element (10) and the structure (14) of a parameter (P, Ps) expressing the influence of the structure (14) on the latter dynamic stiffness (R), and
f) applying the variation law (L) to this corrected dynamic stiffness (Rc, Rcs) in order to achieve stress ($F_1$, $F_2$) in the sealed element (10).

**2.** Method according to Claim 1, **characterised in that** the impact (Fd) is produced on the head (12A) of the sealed element (10).

**3.** Method according to Claim 1, **characterised in that** the impact (Fd) is produced on a base plate (16) of the sealed element (10).

**4.** Method according to any one of the preceding claims, **characterised in that** the law (L) defines a straight line with the equation:

$$(Rd)^{\frac{1}{2}} = \underline{a} \times F + (Ri)^{\frac{1}{2}}$$

where Rd represents the dynamic stiffness of the element tested,
Ri represents the stiffness of the element tested,
F represents the stress in the element tested, and
<u>a</u> depends on the element being tested.

**5.** Method according to any one of Claims 1 to 4, **characterised in that**:

- an intrinsic dynamic stiffness of the structure (Rs) is provided, which corresponds to the parameter (Ps) expressing the influence of the structure (14) on the dynamic stiffness (R) of the sealed element (10) and the structure (14),
- an intrinsic dynamic stiffness (R0) of the sealed element (10) is provided, and
- the dynamic stiffness (Rcs) corrected by said parameter (Ps) is applied to a curve (D (R0, $\underline{a}$)) representing the dynamic stiffness of the sealed element (10), in order to achieve stress in the sealed element (10),

6. Method according to any one of Claims 1 to 4, **characterised in that**:

- dynamic stiffness (R1) of the sealed element (10) together with the structure (14) is provided,
- intrinsic dynamic stiffness (R0) of the sealed element (10) is provided,
- a curve (D (R1, $\underline{a}$)) is constructed, representing the dynamic stiffness of the sealed element (10) and the structure (14) by applying the variation law (L) to the dynamic stiffness (R1) of the sealed element (10) together with the structure (14),
- the parameter (P) expressing the influence of the structure (14) on the dynamic stiffness (R) of the sealed element (10) and the structure (14) is determined, by making the difference between the dynamic stiffness (R1) of the sealed element (10) together with the structure (14) and the intrinsic dynamic stiffness (R0) of the sealed element (10) without the structure (14), and
- the dynamic stiffness (Rc) corrected by said parameter (P) is applied to the curve (D (R1, $\underline{a}$)) representing the dynamic stiffness (R1) of the sealed element (10) and the structure (14), in order to achieve stress in the sealed element (10).

7. Method according to Claim 5 or 6, **characterised in that** the intrinsic dynamic stiffness (R0) of the sealed element (10) is evaluated by performing the steps b) to d) on a sealed element (10) on its own and not yet subject to tensile stress.

8. Method according to Claim 5, **characterised in that** the intrinsic dynamic stiffness (Rs) of the structure (14) is evaluated by performing the steps b) to d) on a structure without a sealed element (10).

9. Method according to Claim 6, **characterised in that** the dynamic stiffness (R1) of the sealed element (10) together with the structure (14) is evaluated by performing the steps b) to d) on a non-stressed sealed element (10).

10. Device for determining the tensile stress ($F_1$, $F_2$) exerted on a sealed element (10) of a structure (14) against a support (22), the sealed element (10) being sealed and subject to tensile stress with respect to the support (22), including:

- a memory ($\underline{M}$) containing a variation law (L) between the dynamic stiffness of the sealed element (10) and a static tensile stress (F) exerted on the latter (10),
- means (26) for subjecting the sealed element (10) to an impact of a given force (Fd) in order to generate vibration in the sealed element (10) and the structure,
- means (28) for recording the vibratory response (32, 32A, 32B, 34) of the sealed element (10) and the structure (14) set in vibration,
- means (36) for determining the dynamic stiffness (R) of the sealed element (10) and the structure (14) from the vibratory response (32, 32A, 32B, 34),
- means (38) for determining the dynamic stiffness (Rc, Rcs) of the sealed element (10) making it possible to correct the dynamic stiffness (R) of the sealed element (10) and the structure (14) of a parameter (P, Ps) expressing the influence of the structure (14) on the latter dynamic stiffness (R), and
- means (40) for applying the variation law (L) to this corrected dynamic stiffness (Rc, Rcs) in order to achieve stress ($F_1$, $F_2$) in the sealed element (10).

11. Device according to the preceding claim, **characterised in that** it comprises mathematical processing means (T) intended to process the vibratory response of the sealed element (10) and the structure (14).

**Patentansprüche**

1. Verfahren zum Bestimmen der Zugkraft (F1, F2), der ein vergossenes Element (10), das einen Aufbau (14) gegen einen Träger (22) hält, ausgesetzt ist, wobei das vergossene Element (10) einer Zugbeanspruchung ausgesetzt ist, umfassend die folgenden Schritte:

a) man stellt ein Variationsgesetz (L) zwischen der dynamischen Steifigkeit des vergossenen Elements (10) und einer statischen Zugkraft (F) bereit, welcher das Elements (10) ausgesetzt ist,
b) man unterwirft das vergossene Element (10) einem Stoß mit einer bestimmten Kraft (Fd), um eine Schwingung des vergossenen Elements (10) und des Aufbaus (14) zu erzeugen,
c) man mißt die Schwingungsreaktion (32, 32A, 32B, 34) des vergossenen Elements (10) und des Aufbaus (14), die in Schwingung versetzt wurden,
d) man bestimmt die dynamische Steifigkeit (R) des vergossenen Elements (10) des Aufbaus (14) ausgehend von der Schwingungsreaktion (32, 32A, 32B, 34),
e) man korrigiert die dynamische Steifigkeit (R) des vergossenen Elements (10) und des Aufbaus (14) um einen Parameter (P, Ps), der den Einfluß des Aufbaus (14) auf diese letztere dynamische Steifigkeit (R) wiedergibt, und
f) man wendet das Variationsgesetz (L) auf diese korrigierte dynamische Steifigkeit (Rc, Rcs) an, um die Kraft (F1, F2) in dem vergossenen Element (10) zu erzielen.

2. Verfahren nach Anspruch 1, **dadurch gekennzeichnet, daß** der Stoß (Fd) auf dem Kopf (12A) des vergossenen Elements (10) ausgeführt wird.

3. Verfahren nach Anspruch 1, **dadurch gekennzeichnet, daß** der Stoß (Fd) auf einer Auflageplatte (16) des vergossenen Elements (10) ausgeführt wird.

4. Verfahren nach einem der vorhergehenden Ansprüche, **dadurch gekennzeichnet, daß** das Gesetz (L) eine Gerade mit der folgenden Gleichung definiert:

$$Rd^{1/2} = \underline{a} \times F + (Ri)^{\,1/2}$$

wobei Rd die dynamische Steifigkeit des getesteten Elements darstellt,
Ri die Steifigkeit des getesteten Elements darstellt,
F die Kraft in dem getesteten Element darstellt und
$\underline{a}$ von dem getesteten Element abhängt.

5. Verfahren nach einem der Ansprüche 1 bis 4, **dadurch gekennzeichnet, daß**:

- man eine intrinsische dynamische Steifigkeit des Aufbaus (Rs), die dem Parameter (Ps) entspricht, der den Einfluß des Aufbaus (14) auf die dynamische Steifigkeit (R) des vergossenen Elements (10) und des Aufbaus (14) wiedergibt, bereitstellt,
- man eine intrinsische dynamische Steifigkeit (R0) des vergossenen Elements (10) bereitstellt, und
- man auf eine Kurve (D (R0, $\underline{a}$)), die die dynamische Steifigkeit des vergossenen Elements (10) darstellt, die mit dem Parameter (Ps) korrigierte dynamische Steifigkeit (Rcs) anwendet, um die Kraft in dem vergossenen Element (10) zu erzielen.

6. Verfahren nach einem der Ansprüche 1 bis 4, **dadurch gekennzeichnet, daß**

- man eine dynamische Steifigkeit (R1) des vergossenen Elements (10) mit dem Aufbau (14) bereitstellt,
- man eine intrinsische dynamische Steifigkeit (R0) des vergossenen Elements (10) bereitstellt,
- man eine Kurve (D (R1, $\underline{a}$)) erstellt, die die dynamische Steifigkeit des vergossenen Elements (10) und des Aufbaus (14) ausgehend von dem Anwenden des Variationsgesetzes (L) auf die dynamische Steifigkeit (R1) des vergossenen Elements (10) mit dem Aufbau (14) darstellt,
- man den Parameter (P), der den Einfluß des Aufbaus (14) auf die dynamische Steifigkeit (R) des vergossenen Elements (10) und des Aufbaus (14) wiedergibt, bestimmt, indem man den Unterschied zwischen der dynamischen Steifigkeit (R1) des vergossenen Elements (10) mit dem Aufbau (14) und einer intrinsischen dynamischen Steifigkeit (R0) des vergossenen Elements (10) ohne den Aufbau (14) bestimmt, und
- man auf die Kurve (D (R1, $\underline{a}$)), die die dynamische Steifigkeit (R1) des vergossenen Elements (10) und des Aufbaus (14) darstellt, die mit dem Parameter (P) korrigierte dynamische Steifigkeit (Rc) anwendet, um die Kraft in dem vergossenen Element (10) zu erzielen.

7. Verfahren nach Anspruch 5 oder 6, **dadurch gekennzeichnet, daß** man die intrinsische dynamische Steifigkeit (R0) des vergossenen Elements (10) allein **dadurch** bewertet, indem man die Schritte b) bis d) an einem vergossenen Element (10) allein, das noch keiner Zugbelastung ausgesetzt ist, durchführt.

8. Verfahren nach Anspruch 5, **dadurch gekennzeichnet, daß** man die intrinsische dynamische Steifigkeit (Rs) des Aufbaus (14) bewertet, indem man die Schritte b) bis d) auf einem Aufbau ohne vergossenes Element (10) durchführt.

9. Verfahren nach Anspruch 6, **dadurch gekennzeichnet, daß** man die dynamische Steifigkeit (R1) des vergossenen Elements (10) mit dem Aufbau (14) bewertet, indem man die Schritte b) bis d) an einem vergossenen Element (10) ohne Belastung ausführt.

10. Vorrichtung zum Bestimmen der Zugkraft (F1, F2), der ein vergossenes Element (10) eines Aufbaus (14) gegen einen Träger (22) ausgesetzt ist, wobei das vergossene Element (10) vergossen und einer Zugbeanspruchung relativ zu dem Träger (22) ausgesetzt ist, umfassend:

   - einen Speicher (<u>M</u>), der das Variationsgesetz (L) zwischen der dynamischen Steifigkeit des vergossenen Elements (10) und einer statischen Zugkraft (F), der dieses Letztere (10) unterworfen wird, enthält,
   - Mittel (26), um das vergossene Element (10) einem Stoß mit bestimmter Kraft (Fd) zu unterwerfen, um eine Schwingung des vergossenen Elements (10) und des Aufbaus zu erzeugen,
   - Mittel (28) zum Messen der Schwingungsreaktion (32, 32A, 32B, 34) des vergossenen Elements (10) und des Aufbaus (14), die in Schwingung versetzt wurden,
   - Mittel (36) zum Bestimmen der dynamischen Steifigkeit (R) des vergossenen Elements (10) und des Aufbaus (14) ausgehend von der Schwingungsreaktion (32, 32A, 32B, 34),
   - Mittel (38), um die dynamische Steifigkeit (Rc, Rcs) des vergossenen Elements (10) zu bestimmen, die es erlauben, die dynamische Steifigkeit (R) des vergossenen Elements (10) und des Aufbaus (14) mit einem Parameter (P, Ps) zu korrigieren, der den Einfluß der Struktur (14) auf diese letztere dynamische Steifigkeit (R) wiedergibt, und
   - Mittel (40) zum Anwenden des Variationsgesetzes (L) auf diese korrigierte dynamische Steifigkeit (Rc, Rcs), um die Kraft (F1, F2) in dem vergossenen Element (10) zu erzielen.

11. Vorrichtung nach dem vorhergehenden Anspruch, **dadurch gekennzeichnet, daß** sie mathematische Verarbeitungsmittel (T) aufweist, die dazu bestimmt sind, die Schwingungsreaktion des vergossenen Elements (10) und des Aufbaus (14) zu verarbeiten.

# FIG.1A

L, D(R₀, a)

L, D(R₁, a)

**FIG.1B**

**FIG.2**

Fd

12A

28

16

FIG.3

V/Fd
(m/sN)

34

α

β

f(Hz)

FIG.4

$\sqrt{R_d}$

$\sqrt{R_0}$

D(R0, $\underline{a}$ )

G1

(N)

**FIG.5**

$\sqrt{R_d}$

$\sqrt{R_{CS}} = \sqrt{R} - \sqrt{R_S}$

$\sqrt{R_0}$

D(R0, $\underline{a}$ )

G2

F1

(N)

**FIG.6**

$\sqrt{R_d}$

$\sqrt{R_C} = \sqrt{R} - (\sqrt{R_1} - \sqrt{R_0})$

$\sqrt{R_1}$

$\sqrt{R_0}$

D(R1, $\underline{a}$ )

D(R0, $\underline{a}$ )

G3

F2

(N)

**FIG.7**

15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4979125 A
- EP 0438347 A
- WO 9953282 A
- GB 1446661 A